# EUROPÄISCHE PATENTANMELDUNG

(11) **EP 1 018 793 A2**
(43) Veröffentlichungstag der Anmeldung: **12.07.2000**
(21) Anmeldenummer: 00100033.0
(22) Anmeldetag: 04.01.2000
(51) Int. Cl.: H02J 3/14

(54) **Verfahren und Vorrichtung zum Schalten von Verbrauchern eines Elektrogerätes**

(30) Priorität: 07.01.1999 DE 19900185
(71) Anmelder: E.G.O. Elektro -Gerätebau GmbH, 75038 Oberderdingen (DE)
(72) Erfinder: Renz, Werner, 75447 Sternenfels (DE); Bogdanski, Franz Dr., 75038 Oberderdingen (DE)
(74) Vertreter: Patentanwälte Ruff, Beier, Schöndorf und Mütschele

(57) **Zusammenfassung**

Durch die Erfindung wird ein Verfahren zum Schalten von mindestens zwei Verbrauchern (15 bis 18) eines Elektrogerätes geschaffen, welche an einen Versorgungsanschluß mit mindestens einem Außenleiter (L1, L2, L3) anschließbar sind, wobei der wenigstens eine Außenleiter eine Höchst-Last (P_{MAX}) aufweist. Dazu wird die Momentanlast (P) des wenigstens einen Außenleiters und/oder der Verbraucher zumindest teilweise erfaßt. Ein zuzuschaltender Verbraucher, für den eine Wahl-Last gewählt worden ist, wird derart mit einer veränderlichen Ist-Last an einen Außenleiter angeschlossen, daß dessen Momentanlast zu jedem Zeitpunkt unter seiner Höchst-Last liegt. Der Verbraucher kann vorteilhaft bei mehreren Außenleitern an jeweils einen beliebigen angeschlossen werden. Insbesondere bei taktenden Verbrauchern können die Taktzeiten (EIN-Zeit und/oder AUS-Zeit) verschoben und/oder verkürzt werden. Bevorzugt werden benachbart EIN-Zeiten aneinander anschließend gelegt, insbesondere mit Schaltvorgängen jeweils im Nulldurchgang des Stromes.

## Beschreibung

### ANWENDUNGSGEBIET UND STAND DER TECHNIK

Die Erfindung betrifft ein Verfahren zum Schalten von mindestens zwei Verbrauchern eines Elektrogerätes, die an einen Versorgungsanschluß mit mindestens einem Außenleiter anschließbar sind, wobei der Außenleiter eine Höchst-Last aufweist. Ein Anwendungsgebiet sind Elektrogeräte im Haushalt, bei denen sowohl ein Zweileiteranschluß als auch ein Vierleiteranschluß (Drehstromkreis) wegen standardmäßig verlegter Leitungsquerschnitte in der Regel auf einen Maximalstrom von 16 Ampère pro Außenleiter begrenzt ist. Ein bevorzugtes Anwendungsgebiet sind Elektrowärmegeräte, wie beispielsweise ein Kochfeld mit mehreren Kochplatten.

Elektrogeräte mit mehreren Verbrauchern weisen häufig wenigstens zwei Verbraucher pro Außenleiter auf. Es kann jedoch vorkommen, daß ein Betrieb beider Verbraucher mit maximaler Leistung die zulässige Höchst-Last des Außenleiters überschreitet, die Sicherungen des Außenleiters würden demzufolge ansprechen. Es sind Lösungen vorgeschlagen worden, bei einer drohenden Überschreitung der Höchst-Last des Außenleiters dessen zusätzliche Belastung zu unterbinden, das bedeutet, daß ein angewählter Verbraucher nicht zugeschaltet wird. Ebenso wie die Möglichkeit von bevorzugten Verbrauchern, zu deren Gunsten andere, nachgeordnete Verbraucher abgeschaltet werden, ist dies jedoch im Ergebnis nicht befriedigend.

### AUFGABE UND LÖSUNG

Es ist Aufgabe der Erfindung, ein o.g. Verfahren zu schaffen, das es ermöglicht, ein Überschreiten der Höchst-Last eines Außenleiters zu vermeiden und gleichzeitig nach Möglichkeit einen zuzuschaltenden Verbraucher zu betreiben.

Diese Aufgabe wird dadurch gelöst, daß die Momentanlasten des Außenleiters und/oder der Verbraucher zumindest teilweise erfaßt werden und ein mit einer gewählten Wahl-Last zuzuschaltender Verbraucher derart mit einer veränderlichen Ist-Last an einen Außenleiter des Versorgungsanschlusses angeschlossen wird, daß dessen Momentanlast zu jedem Zeitpunkt unter seiner zulässigen Höchst-Last bleibt. Hiervon ausgehend eröffnen sich je nach Art der Verbraucher bzw. ihres Betriebes verschiedene Möglichkeiten.

Ist die freie Lastreserve des wenigstens einen Außenleiters größer als die anzuschließende Wahl-Last des Verbrauchers, so kann der Verbraucher einfach direkt an diesen Außenleiter angeschlossen werden. Seine Ist-Last entspricht der gewünschten Wahl-Last.

Bei Verbrauchern, die im wesentlichen im Intervallbetrieb betrieben werden, insbesondere mit einem Wechsel zwischen Maximal-Last (EIN-Zeit) und Null-Last (AUS-Zeit), bei denen die Höhe der Dauerleistung bzw. der Ist-Last durch das Taktverhältnis vorgegeben ist, können beim Anschluß an einen Außenleiter die EIN-Zeiten in die Phasen gelegt werden, in denen der Außenleiter ausreichende freie Lastreserven aufweist. Derartige Verbraucher sind beispielsweise Strahlungsheizkörper für eine Kochmulde eines Elektroherdes, die im Dauerbetrieb taktend betrieben werden. In ihrer Anheizphase werden sie je nach Höhe der gewählten Last bzw. Dauerleistung eine gewisse Zeit lang kontinuierlich betrieben, um dann in den Taktbetrieb überzugehen. Derartige Verbraucher können je nach Arbeitszustand mit einer der beiden vorstehend beschriebenen Ausgestaltungsmöglichkeiten des Verfahrens betrieben werden.

Pro Verbraucher ist mindestens ein Anschlußmittel an wenigstens einem Außenleiter vorgesehen, insbesondere Anschlußmittel an mehrere bzw. jeden Außenleiter. Es kann vorgesehen sein, daß ein, insbesondere mehrere oder jeder, Verbraucher an mehrere oder jeden Außenleiter angeschlossen werden. Auf diese Weise kann eine Lastverteilung nicht nur durch Verändern der Taktverhältnisse bzw. Verschieben der Ein-Zeiten von Verbrauchern an einem Außenleiter vorgenommen werden, sondern ein teilweises, insbesondere ganz freies Aussuchen von Lastreserven möglich. Besonders bevorzugt kann jeder Verbraucher über Anschlußmittel mit jedem Außenleiter verbunden werden. Dies ermöglicht es der Lastverteilung, einen möglichst optimalen Betriebszustand einzustellen. Die Anschlußmittel sind bevorzugt Schalter, insbesondere Leistungsrelais. Ebenso können elektronische Schalter wie Transistoren o. dgl. verwendet werden.

Bevorzugt werden die EIN-Zeiten der an einen Außenleiter angeschlossenen Verbraucher alterniert, wobei die Verbraucher vorzugsweise im Taktbetrieb arbeiten. Auf diese Weise ist die Momentanlast des Außenleiters nicht die Summe der jeweiligen Ist-Lasten bzw. Maximal-Lasten der Verbraucher. Die Summierung kann integral über eine längere Zeit erfolgen, wobei der Außenleiter vorteilhaft im wesentlichen ausgeglichen belastet wird. Vorzugsweise ist zu jedem Zeitpunkt an einem Außenleiter nur jeweils ein Verbraucher angeschlossen.

Wenn die EIN-Zeiten von Verbrauchern an einem Außenleiter direkt aneinander anschließend gelegt werden, können störende Netzrückwirkungen durch Stromspitzen bei starken Lastwechseln vermieden oder zumindest verringert werden. In diesem Fall wird lediglich der Stromdifferenzwert und nicht die gesamte Laständerung in dem Außenleiter wirksam. Hier ist es besonders von Vorteil, wenn Verbraucher mit ähnlicher Ist-Last bzw. Maximal-Last hintereinander gelegt werden.

Gemäß einer Ausgestaltung der Erfindung ist es möglich, die EIN-Zeiten und/oder die AUS-Zeiten wenigstens eines Verbrauchers zur Anpassung an freie Lastreserven des Außenleiters, an den sie angeschlossen werden, zu variieren. Eine Variation sollte innerhalb eines vorgegebenen Spielraumes erfolgen, beispielsweise nicht mehr als 10% oder 20% der gewählten Einstellung betragen. Dadurch wird sich in vielen Anwendungsfällen ausreichend Spielraum ergeben, EIN-Zeiten verschiedener Verbraucher derart zu legen, daß auf dem einen oder allen Außenleitern jeweils ausreichende Lastreserven bzw. "Last-Lücken" bestehen, in die eine jeweils anfallende EIN-Zeit eines Verbrauchers gelegt werden kann. Dabei sollte die Ist-Lastverteilung über mehrere Intervalle der gewünschten Dauerleistung bzw. Wahl-Last des Verbrauchers entsprechen, insbesondere bei weniger als zehn Intervallen, vorzugsweise bei weniger als fünf Intervallen. Es kann eine geringfügige Abweichung von der Wahl-Last vorgenommen werden, die jedoch bei einem, mehreren oder allen angeschlossenen Verbrauchern nicht so groß sein sollte, daß sie den Betrieb nachhaltig beeinträchtigt bzw. einem Benutzer überhaupt auffällt.

Die beim momentanen Betriebszustand des Elektrogerätes gegebene Ist-Lastverteilung bzw. die zur Verfügung stehenden Lastreserven des oder der Außenleiter können jederzeit ermittelt werden. Bei Bekanntsein der momentanen Lastverteilung kann ein neu anzuschließender Verbraucher unter Umständen sofort mit einer bestimmten Wahl-Last angeschlossen werden, ohne daß diese Anschlußmöglichkeit erst ermittelt werden müßte. Eine Verzögerung beim Einschalten eines neuen Verbrauchers bzw. beim Erhöhen der Leistung eines bereits angeschlossenen Verbrauchers kann vermieden werden. Die angeschlossenen Lasten können auf mehrere Außenleiter verteilt sein.

Es können bevorzugte Betriebsarten für die Außenleiter und/oder die Verbraucher vorgegeben sein bzw. gewählt werden. Gemäß einer Möglichkeit kann jeweils ein Verbraucher über ein Anschlußmittel ausschließlich an einen bestimmten Außenleiter angeschlossen werden, wodurch sich insgesamt die Anzahl der Anschluß- bzw. Schaltmittel verringern läßt. Gemäß einer weiteren Möglichkeit kann wenigstens einem Verbraucher ein bevorzugter Außenleiter zugewiesen sein, an den er in den häufigsten Fällen angeschlossen wird. Bei nicht ausreichender Lastreserve dieses bevorzugten Außenleiters kann der Verbraucher an einen anderen, evtl. bevorzugten Ausweich-Außenleiter mit ausreichender Lastreserve angeschlossen werden. Somit können für einen Verbraucher Abfragefolgen vorgegeben werden. Wiederum eine weitere Möglichkeit kann vorsehen, daß ein oder mehrere Verbraucher an einen beliebigen Außenleiter mit ausreichender Lastreserve angeschlossen werden können. Auf diese Weise ist beispielsweise eine in etwa gleichmäßige Benutzung der Anschluß- bzw. Schaltmittel möglich.

Sollten der oder die Außenleiter, an den oder die ein Verbraucher neu anzuschließen ist, keine genügende Lastreserve aufweisen, so kann dieser Verbraucher mit der verbleibenden Lastreserve eines Außenleiters betrieben werden. Dabei kann er unter Umständen unterhalb der Wahl-Last betrieben werden, insbesondere im Intervallbetrieb mit durch Verkürzung der EIN-Zeiten geringerer Ist-Last, evtl. für eines oder mehrere Intervalle. Alternativ kann in dem vorstehenden Fall wenigstens ein bereits angeschlossener Verbraucher mit verringerter Ist-Last betrieben werden, um dem neu anzuschließenden Verbraucher einen Betrieb mit der Wahl-Last zu ermöglichen. Dies kann beispielsweise für Anwendungen beim Elektrokochen bedeutend sein, wo vor allem die Anheizphase wichtiger ist als die Fortkochphase. Es können mehrere oder alle Verbraucher mit verringerter Ist-Last betrieben werden, insbesondere mit demselben Anteil an der jeweiligen Wahl-Last.

Einerseits ermöglicht es die Erfindung, bei ungenügender Lastreserve des Versorgungsanschlusses Prioritäten zu vergeben. Andererseits kann es bevorzugt sein, in einem solchen Fall alle Verbraucher mit verringerter Last zu betreiben, wobei insbesondere alle Verbraucher mit demselben Anteil an der für sie gewählten Last weiterbetrieben werden. Eine dieser Alternativen kann vom Benutzer vorgegeben werden.

Bevorzugt wird der Versorgungsanschluß, insbesondere der wenigstens eine Außenleiter, überwacht bzw. der Spannungs- und/oder Stromverlauf aufgezeichnet. Dies ermöglicht es, einen Verbraucher im Nulldurchgang des Versorgungsstroms an den Außenleiter anzuschließen bzw. davon abzutrennen, um die Netzrückwirkungen zu reduzieren. Zur Optimierung der Lastverteilung kann häufiger geschaltet werden. Auch bei direkt aneinander anschließenden EIN-Zeiten an einem Außenleiter ist ein Schalten im Nulldurchgang vorteilhaft.

Der Zustand angeschlossener Verbraucher kann an Anzeigemitteln dargestellt werden, wobei vorzugsweise bei nicht ausreichender Lastreserve des wenigstens einen Außenleiters für einen anzuschließenden Verbraucher alternative Betriebsarten zur Auswahl durch den Benutzer angezeigt werden können. Davon ausgehend kann ein Benutzer wählen, ob eine Leistungsreduzierung des neu anzuschließenden Verbrauchers, der bereits angeschlossenen Verbraucher oder aller Verbraucher erfolgen soll. Alternativ kann die Änderung des Betriebszustandes von dem Elektrogerät bzw. einer Steuerung vorgenommen werden und dem Verbraucher angezeigt werden, wodurch ihm evtl. eine Korrekturmöglichkeit offengelassen wird.

Des weiteren umfaßt die Erfindung vorzugsweise eine Vorrichtung zum Schalten von mindestens zwei Verbrauchern eines Elektrogerätes, die über Anschlußmittel an einen Versorgungsanschluß mit mindestens einem Außenleiter anschließbar sind, wobei der Außenleiter eine Höchst-Last aufweist. Erfindungsgemäß weist die Vorrichtung eine Steuereinrichtung und mit ihr verbundene Last-Überwachungsmittel für den Versorgungsanschluß bzw. die Verbraucher auf, wobei die Steuereinrichtung mit den Anschlußmitteln sowie Eingabemitteln für die Betriebsart eines Verbrauchers verbunden ist. Eine solche Vorrichtung ermöglicht es, der Steuereinrichtung im wesentlichen bzw. jederzeit einen Überblick über die aktuelle Lastverteilung zu verschaffen. Davon ausgehend können über die Eingabemittel gewählte Betriebsarten eines Verbrauchers berücksichtigt werden und, evtl. abgeändert, durch Betätigen der Anschlußmittel den Anschluß des Verbrauchers an einen Außenleiter bewirken. Es ist von Vorteil, wenn jeder Verbraucher Anschlußmittel an jedem Außenleiter aufweist. Damit kann jeder Verbraucher beliebig "geschoben" werden.

Die Steuereinrichtung weist bevorzugt einen Mikroprozessor auf, der mit einem zusätzlichen Speicher versehen sein kann. In den Speicher können unterschiedliche Programmabläufe sowie Parameter und Vorzugsbetriebsarten für die Verbraucher beim Fertigen des Elektrogerätes oder nachträglich benutzerabhängig eingespeichert werden.

Die Überwachungsmittel können die momentane Lastverteilung ermitteln und an die Steuereinrichtung übergeben, wobei sie vorzugsweise als zusätzliche Funktion den Nulldurchgang des Versorgungsstromes in einem bzw. in jedem Außenleiter erfassen. Des weiteren kann die momentane Lastverteilung durch Überwachung der Schaltbefehle für die Verbraucher und eine davon ausgehende Berechnung ermittelt werden.

Die Verbraucher sind bevorzugt Heizeinrichtungen, insbesondere Strahlheizkörper, eines Elektrowärmegerätes. Dieses kann ein Kochfeld und/oder einen Backofen aufweisen, wobei die Verbraucher bevorzugt im Intervallbetrieb durch Takten zwischen Maximal-Leistung (EIN-Zeit) und Null-Leistung (AUS-Zeit) betrieben werden. Des weiteren ist es bei Verbrauchern mit gleichmäßiger Belastung möglich, die Lasten an dem oder den Außenleitern zu verteilen und so jeweils unter der Höchst-Last der Außenleiter zu bleiben. Gemäß einer Ausführung der Erfindung kann ein kombinierter Betrieb von taktenden Verbrauchern sowie Dauerlastverbrauchern durch Anpassen der jeweiligen EIN-Zeiten erfolgen.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränkt die unter diesen gemachten Aussagen nicht in ihrer Allgemeingültigkeit.

### KURZBESCHREIBUNG DER ZEICHNUNGEN

Ausführungsbeispiele der Erfindung sind in den Zeichnungen dargestellt und werden im folgenden näher erläutert. In den Zeichnungen zeigen:
- Fig. 1: einen Belastungsfahrplan eines Außenleiters eines Versorgungsanschlusses, bei dem zu einer bestehenden Grundlast eine getaktete Last zugeschaltet wird,
- Fig. 2: einen Belastungsfahrplan eines Außenleiters ähnlich Fig. 1, bei dem zu einer bestehenden getakteten Grundlast eine getaktete Last zugeschaltet wird,
- Fig. 3: einen Belastungsfahrplan eines Außenleiters ähnlich Fig. 2, bei dem die AUS-Zeiten der zugeschalteten Last verändert werden,
- Fig. 4: Belastungsfahrpläne der drei Außenleiter eines Versorgungsanschlusses, bei dem eine zugeschaltete Last mit ihren EIN-Zeiten passend auf jeweils einen der Außenleiter verteilt wird und
- Fig. 5: eine Vorrichtung mit der vier Verbraucher an einen beliebigen Außenleiter eines Versorgungsanschlusses angeschlossen werden können.

### DETAILLIERTE BESCHREIBUNG DER AUSFÜHRUNGBEISPIELE

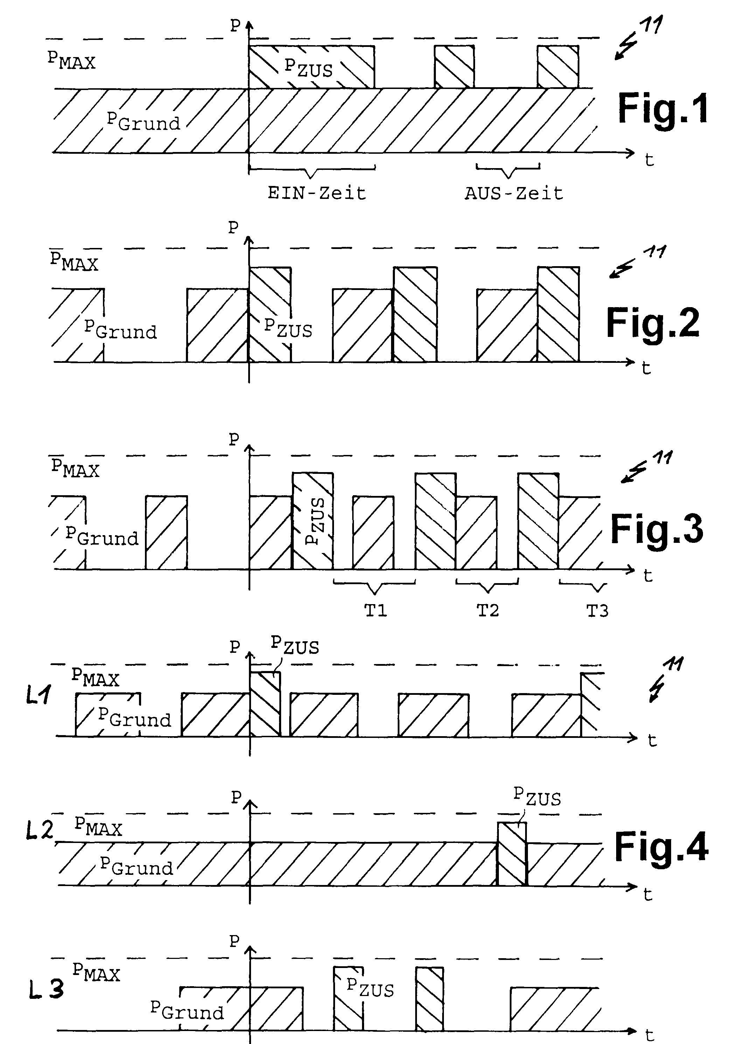

In Fig. 1 ist ein sogenannter Belastungsfahrplan 11 eines Außenleiters eines Versorgungsanschlusses dargestellt. Dabei ist die Momentan-Last P über der Zeit t aufgetragen. P_{MAX} stellt gestrichelt die Höchst-Last des Außenleiters dar. Die Skalierung der Achsen ist linear Die Position der P-Achse gibt an, zu welchem Zeitpunkt ein zusätzlicher Verbraucher angeschlossen werden soll.

Der Außenleiter weist bereits die schräg nach rechts oben gestrichelte konstante Grundlast P_{Grund} auf. Da die Höchst-Last P_{MAX} größer ist als die Summe von P_{Grund} und der zusätzlichen Last P_{ZUS}, kann die Zusatz-Last zusätzlich aufgeschaltet werden. Die schräg nach links oben gestrichelte Zusatz-last P_{ZUS} wird dabei getaktet, zu Beginn mit verlängerter EIN-Zeit entsprechend dem Ankochvorgang einer Elektrokochplatte. Zum Fortkochen genügen kürzere, konstante EIN-Zeiten. Die AUS-Zeiten sind konstant.

Der Belastungsfahrplan 11 in Fig. 2 weist eine mit festem Taktverhältnis getaktete Grundlast P_{Grund} auf. Ein Einschalten sowohl der Grundlast als auch der Zusatzlast P_{ZUS}, die ebenfalls mit einem festen Verhältnis getaktet ist, zur gleichen Zeit würde die Höchst-Last P_{MAX} überschreiten und ist deswegen auf alle Fälle zu vermeiden. P_{ZUS} wird so zugeschaltet, daß die EIN-Zeiten von P_{ZUS} in die AUS-Zeiten der Grundlast fallen. Als weitere Besonderheit sind in Fig. 2 die EIN-Zeiten von P_{Grund} direkt in die EIN-Zeiten von P_{ZUS} übergehend dargestellt. Auf diese Weise können Netzrückwirkungen verringert werden.

Die Fig. 3 zeigt einen Belastungsfahrplan ähnlich Fig. 2 mit kontinuierlich getakteter Grundlast P_{Grund}. Die Summe von P_{Grund} und der zusätzlichen Last P_{ZUS} würde die Höchst-Last P_{MAX} wiederum überschreiten. Da zum eigentlich gewünschten Einschalt-Zeitpunkt bereits die Grundlast angeschlossen ist, kann P_{ZUS} erst verspätet angeschlossen werden, frühestens (wie dargestellt) direkt an die EIN-Zeit der Grundlast anschließend. Dies verdeutlicht, daß EIN- oder AUS-Zeiten verschoben werden können. Es ist zu erkennen, daß die zweite AUS-Zeit T2 der zusätzlichen Last nicht der ersten AUS-Zeit T1 entspricht, sondern kürzer ist. Dies kann unterschiedliche Gründe haben. Zum einen ist es möglich, daß für den Verbraucher der zusätzlichen Last eine Wahl-Last gewählt wurde, bei der als AUS-Zeit T1 resultieren müßte. Da jedoch das dritte Intervall der zusätzlichen Last in diesem Falle zum Teil in eine EIN-Zeit der Grundlast fallen würde, wurde dieses Intervall quasi vorgezogen und T2 ist somit etwas kürzer als T1. Dies kann dadurch ausgeglichen werden, daß die teilweise eingezeichnete dritte AUS-Zeit T3 größer ist als T2. Weiters wäre es möglich, die EIN-Zeiten der zusätzlichen Last zu verkürzen, um bei verkürzter AUS-Zeit das Taktverhältnis wieder herzustellen. Wichtig ist jedoch für alle Variationen der EIN- und/oder AUS-Zeiten bzw. Taktverhältnisse, daß die Gesamtleistung über längere Zeit nicht verändert werden sollte.

Als weiterer Fall ist es denkbar, daß eine Wahl-Last gewählt wurde, bei der das zweite EIN-Intervall der zusätzlichen Last mitten in der entsprechenden AUS-Zeit der Grundlast liegen würde. In einem solchen Fall kann die EIN-Zeit der zusätzlichen Last soweit zeitlich nach vorne oder hinten "geschoben" werden, daß sie an eine EIN-Zeit der Grundlast P_{Grund} anschließt, um oben beschriebene Netzrückwirkungen zu reduzieren. In Fig. 3 wäre dann die fragliche EIN-Zeit der zusätzlichen Last durch Verlängern von T1 über das eigentlich vorgesehene Maß hinaus zeitlich nach hinten geschoben worden. Dies kann durch ein gewisses "Vorziehen" zu einem späteren Zeitpunkt wieder ausgeglichen werden, um die von einem Benutzer eingestellte Wahl-Last auf längere Dauer einzuhalten, in diesem Fall durch die kürzere AUS-Zeit T2.

Anstelle eines vorstehend beschriebenen Verschiebens der EIN-Zeiten (oder AUS-Zeiten) der zusätzlichen Last können auch die der Grundlast P_{Grund} verschoben werden.

Die drei Belastungsfahrpläne 11 in Fig. 4 stellen die drei Außenleiter L1, L2 und L3 eines Drehstrom-Versorgungsanschlusses dar, wie er oft zum Anschluß eines Elektroherdes zur Verfügung steht. An den Außenleitern liegen bereits Grundlasten an, am ersten eine relativ eng getaktete (P_{Grund1}), am zweiten eine konstante (P_{Grund2}) und am dritten eine mit großem Abstand getaktete. Es ist zu erkennen, wie die EIN-Zeiten einer zusätzlichen Last P_{ZUS} jeweils auf einen passenden Außenleiter gelegt werden. Die erste EIN-Zeit liegt am ersten Außenleiter L1 und schließt vorteilhaft direkt an dessen EIN-Zeit an. Für die nächsten beiden EIN-Zeiten ist die zusätzliche Last an den dritten Außenleiter L3 angeschlossen und fällt in eine AUS-Zeit von P_{Grund3}. Da erkennbar für die folgende EIN-Zeit keine ausreichende Lastreserve an einem der Außenleiter zur Verfügung steht, wird der Verbraucher für diese EIN-Zeit an den zweiten Außenleiter L2 angeschlossen. Dabei wird dessen Grundlast P_{Grund2} während dieser EIN-Zeit abgestellt. Handelte es sich bei P_{Grund2} um eine Last, die in ihrer Höhe beliebig variabel ist, könnte sie während der EIN-Zeit mit der verbleibenden Lastreserve (P_{MAX} - P_{ZUS}) weiterhin angeschlossen werden. Ein Ausgleich des Leistungsausfalls P_{Grund3} kann dadurch erzielt werden, daß sie vor und/oder nach der EIN-Zeit für eine begrenzte Zeit soweit erhöht wird, daß die Dauerleistung über längere Zeit wieder erreicht wird.

Weitere Möglichkeiten, die vierte EIN-Zeit in Fig. 4 zu plazieren, wäre ein Anschluß an L1 oder L3, wobei entweder die EIN-Zeit der zusätzlichen Last vorgezogen bzw. verkürzt werden müßte oder die EIN-Zeiten der jeweiligen Grundlast nach hinten geschoben bzw. verkürzt werden müßten. Die fünfte EIN-Zeit ist entsprechend der ersten EIN-Zeit auf L1 gelegt.

Aus den vorstehend beschriebenen prinzipiellen Möglichkeiten ergibt sich, daß durch ein Verfahren gemäß der Erfindung die Lasten, insbesondere Schaltintervalle von zu taktenden Lasten, bewußt gesetzt, in gewissem Maß verschoben und auch verkürzt oder verlängert werden können. Dies gilt sowohl für zusätzlich anzuschließende wie auch für bereits angeschlossene Lasten. Es ist zu erkennen, daß es über die vorstehend beschriebenen Beispiele hinaus zahlreiche Möglichkeiten gibt, ein erfindungsgemäßes Verfahren auszugestalten.

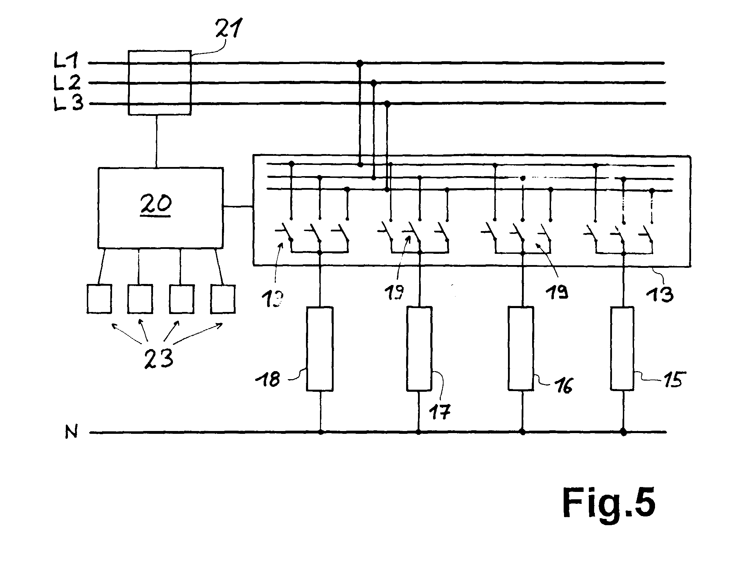

In Fig. 5 ist eine Vorrichtung zum Schalten von Verbrauchern an Außenleiter eines Versorgungsanschlusses dargestellt, beispielsweise auf eine der vorstehend beschriebenen Arten. Sie zeigt drei Außenleiter L1, L2 und L3 sowie den N-Leiter eines Drehstromanschlusses als Versorgungsanschluß. L1, L2 und L3 sind mit einer Schaltanlage 13 verbunden. Ebenso sind Verbraucher 15 bis 18 an die Schaltanlage 13 und den N-Leiter angeschlossen, weitere Verbraucher könnten angeschlossen sein. Über Schalter 19 können die Verbraucher 15 bis 18 an jeden der Außenleiter L1 bis L3 angeschlossen werden.

Die Schaltanlage 13 ist mit einer Steuerung 20 verbunden. Die Steuerung 20 weist eine Überwachungseinrichtung 21 für jeden Außenleiter L1 bis L3 auf. Mit der Überwachungseinrichtung 21 können an jedem Außenleiter L1 bis L3 die momentane Lastverteilung und/oder der Stromverlauf ermittelt werden. Bei einer im allgemeinen festen Netzspannung wird vorteilhaft aus dem erfaßten Strom die momentane Lastverteilung ermittelt.

Des weiteren sind Eingabevorrichtungen 23 an die Steuerung 20 angeschlossen. Über diese Eingabevorrichtungen 23 kann ein Benutzer die Wahl-Last für die Verbraucher 15 bis 18 eingeben. Die Verbraucher 15 bis 18 können beispielsweise Heizeinrichtungen einer Kochmulde sein, wobei sogenannte Zweikreisheizungen, bestehend aus einem Grund- und einem Zusatz-Heizkörper, als zwei Verbraucher anzusehen sind.

Diese Vorrichtung eignet sich für ein Verfahren, bei dem alle Verbraucher 15 bis 18 entsprechend einer der oben beschriebenen Möglichkeiten an jeweils einen der Außenleiter L1 bis L3 angeschlossen werden. Alternativ wäre es möglich, zumindest einen der Verbraucher 15 bis 18 mit nur einem Schalter 19 an nur einen der Außenleiter, beispielsweise an L1, zu versehen. Dadurch kann der Aufwand reduziert werden, gleichzeitig werden die Möglichkeiten eines erfindungsgemäßen "Lastmanagements" eingeschränkt.

## Patentansprüche

1. Verfahren zum Schalten von mindestens zwei Verbrauchern (15 bis 18) eines Elektrogerätes, die an einen Versorgungsanschluß mit mindestens einem Außenleiter (L1 bis L3) anschließbar sind, wobei der wenigstens eine Außenleiter eine Höchst-Last (P_{MAX}) aufweist, dadurch gekennzeichnet, daß die Momentanlast (P) des wenigstens einen Außenleiters und der Verbraucher zumindest teilweise erfaßt wird und ein zuzuschaltender Verbraucher, für den eine Wahl-Last gewählt worden ist, derart mit einer veränderlichen Ist-Last (P_{ZUS}) an einen Außenleiter angeschlossen wird, daß dessen Momentanlast zu jedem Zeitpunkt unter seiner Höchst-Last liegt.

2. Verfahren nach Anspruch 1, dadurch gekennzeichnet, daß bei freier Lastreserve des wenigstens einen Außenleiters (L1 bis L3), die größer als die anzuschließende Wahl-Last des Verbrauchers (15 bis 18) ist, der Verbraucher an diesen Außenleiter angeschlossen wird, wobei seine Ist-Last (P_{ZUS}) der Wahl-Last entspricht.

3. Verfahren nach Anspruch 1 oder 2, dadurch gekennzeichnet, daß wenigstens ein Verbraucher (15 bis 18) im wesentlichen im Intervallbetrieb betrieben wird, insbesondere mit Wechsel zwischen einer Maximal-Last (EIN-Zeit) und einer Null-Last (AUS-Zeit), wobei durch das Taktverhältnis die Höhe seiner Dauerleistung bzw. die Ist-Last (P_{ZUS}) gegeben ist, wobei vorzugsweise beim Anschluß eines Verbrauchers an den wenigstens einen Außenleiter (L1 bis L3) dessen EIN-Zeiten in die Phasen gelegt werden, in denen der Außenleiter ausreichend hohe freie Lastreserven aufweist, sowie ggf. die EIN-Zeiten der an den wenigstens einen Außenleiter (L1 bis L3) angeschlossenen Verbraucher (15 bis 18) alterniert werden, insbesondere an dem Außenleiter zu jedem Zeitpunkt nur jeweils ein Verbraucher angeschlossen ist, die EIN-Zeiten von Verbrauchern (15 bis 18) an wenigstens einem Außenleiter (L1 bis L3), insbesondere von Verbrauchern mit ähnlicher Ist-Last, direkt aneinander anschließend gelegt werden und/oder die EIN-Zeiten und/ oder die AUS-Zeiten wenigstens eines Verbrauchers (15 bis 18) zur Anpassung an freie Lastreserven des Außenleiters (L1 bis L3), an den sie angeschlossen werden, variiert werden, vorzugsweise innerhalb eines vorgegebenen Spielraumes variiert werden, wobei die Ist-Lastverteilung über mehrere Intervalle der gewünschten Dauerleistung für den Verbraucher entspricht.

4. Verfahren nach einem der vorhergehenden Ansprüche, dadurch gekennzeichnet, daß die Ist-Lasten (P_{ZUS}) der angeschlossenen Verbraucher (15 bis 18) auf mehrere Außenleiter (L1 bis L3) verteilt werden, wobei insbesondere pro Außenleiter zu jedem Zeitpunkt nur ein Verbraucher angeschlossen wird und/oder in etwa aufeinanderfolgende EIN-Zeiten direkt aneinander anschließend gelegt werden.

5. Verfahren nach einem der vorhergehenden Ansprüche, dadurch gekennzeichnet, daß jeder Verbraucher (15 bis 18) an jeden Außenleiter (L1 bis L3) anschließbar ist.

6. Verfahren nach einem der Ansprüche 1 bis 4, dadurch gekennzeichnet, daß wenigstens einem Verbraucher (15 bis 18) ein bevorzugter Außenleiter (L1 bis L3) zugewiesen ist, wobei der Verbraucher bei nicht ausreichender Lastreserve des bevorzugten Außenleiters an einen anderen Außenleiter mit ausreichender Lastreserve angeschlossen wird.

7. Verfahren nach einem der vorhergehenden Ansprüche, dadurch gekennzeichnet, daß bei einer unter der Wahl-Last liegenden Lastreserve des wenigstens einen Außenleiters (L1 bis L3) ein neu anzuschließender Verbraucher (15 bis 18) mit der verbleibenden Lastreserve betrieben wird, insbesondere im Intervallbetrieb mit durch Verkürzung der EIN-Zeiten geringerer Ist-Last (P_{ZUS}).

8. Verfahren nach einem der Ansprüche 1 bis 6, dadurch gekennzeichnet, daß bei einer unter der Wahl-Last eines neu anzuschließenden Verbrauchers (15 bis 18) liegender Lastreserve des wenigstens einen Außenleiters (L1 bis L3) wenigstens ein bereits angeschlossener Verbraucher mit verringerter Ist-Last (P_{ZUS}) betrieben wird, wobei vorzugsweise alle Verbraucher mit verringerter Ist-Last betrieben werden, insbesondere alle Verbraucher mit dem selben Anteil an der jeweiligen Wahl-Last.

9. Verfahren nach einem der vorhergehenden Ansprüche, dadurch gekennzeichnet, daß der Versorgungsanschluß, vorzugsweise der wenigstens eine Außenleiter (L1 bis L3), überwacht wird und ein anzuschließender Verbraucher (15 bis 18) im Nulldurchgang des Versorgungsstromes an den Außenleiter angeschlossen und/oder davon abgetrennt wird.

10. Verfahren nach einem der vorhergehenden Ansprüche, dadurch gekennzeichnet, daß der Zustand der Verbraucher (15 bis 18) an Anzeigemitteln dargestellt wird, wobei vorzugsweise bei nicht ausreichender Lastreserve des wenigstens einen Außenleiters (L1 bis L3) für einen mit einer Wahl-Last anzuschließenden Verbraucher alternative Betriebsarten zur Auswahl angezeigt werden.

11. Vorrichtung zum Schalten von mindestens zwei Verbrauchern (15 bis 18) eines Elektrogerätes, die über Anschlußmittel (19) an einen Versorgungsanschluß mit mindestens einem Außenleiter (L1 bis L3) anschließbar sind, wobei der Außenleiter eine Höchst-Last (P_{MAX}) aufweist, dadurch gekennzeichnet, daß sie eine Steuereinrichtung (20) und mit ihr verbundene Leistungs-Überwachungsmittel (21) für den Versorgungsanschluß und die Verbraucher aufweist, wobei die Steuereinrichtung mit den Anschlußmitteln und Eingabemitteln (23) für den Betrieb eines Verbrauchers verbunden ist.

12. Vorrichtung nach Anspruch 11, dadurch gekennzeichnet, daß jeder Verbraucher (15 bis 18) Anschlußmittel (19) an jeden Außenleiter (L1 bis L3) aufweist.

13. Vorrichtung nach Anspruch 11 oder 12, dadurch gekennzeichnet, daß die Überwachungsmittel (21) die momentane Lastverteilung ermitteln und an die Steuereinrichtung (20) übergeben, wobei sie vorzugsweise zusätzlich den Nulldurchgang des Versorgungsstromes in jedem Außenleiter (L1 bis L3) erfassen.

14. Vorrichtung nach einem der Ansprüche 11 bis 13, dadurch gekennzeichnet, daß die Verbraucher (15 bis 18) Heizeinrichtungen, vorzugsweise Strahlheizkörper, sind und das Elektrogerät ein Elektrowärmegerät ist, insbesondere ein Kochfeld oder ein Backofen.
